# EUROPEAN PATENT SPECIFICATION

(11) **EP 1 339 125 B1**
(45) Date of publication and mention of the grant of the patent: **07.10.2009**
(21) Application number: 03000575.5
(22) Date of filing: 13.01.2003
(51) Int. Cl.: H01M 8/04, H01M 8/06

(54) **Purging control of fuel cell anode effluent**
Kontrolle der Gasspülung von Anodenabgas einer Brennstoffzelle
Contrôle de purge de l'effluent d'anode d'une pile à combustible

(30) Priority: 15.02.2002 JP 2002038072
(43) Date of publication of application: 27.08.2003
(73) Proprietor: NISSAN MOTOR CO., LTD., Yokohama-shi Kanagawa-ken (JP)
(72) Inventor: Takahashi, Naoki, Yokohama-shi, Kanagawa (JP)
(74) Representative: Weber, Joachim

(56) References cited:
- EP-A- 0 692 835
- EP-A- 0 911 629
- EP-A- 1 120 844
- EP-A1- 0 596 366
- EP-A1- 1 018 774
- DE-A1- 10 029 468
- JP-A- 6 223 859
- JP-A- 2001 023 673

## Description

This invention relates to fuel cell anode effluent processing.

### BACKGROUND OF THE INVENTION

Tokkai 2001-23673 published by the Japanese Patent Office in 2001 discloses a permeation device for hydrogen-rich gas which uses a hydrogen permeable membrane to increase the hydrogen concentration of hydrogen-rich gas which is supplied to the anode of a fuel cell. The hydrogen permeable membrane has a quality for allowing the permeation of hydrogen molecules and for disallowing the permeation of carbon monoxide (CO), methane (CH₄), carbon dioxide (CO₂) and the like, which have larger molecules than hydrogen molecules. A palladium alloy permeable membrane or a solid polymer hollow fiber membrane is used as this type of hydrogen permeable membrane.

The permeation device comprises two chambers defined by the hydrogen permeable membrane. Hydrogen-rich gas is supplied to the first chamber. The hydrogen permeable membrane allows the passage of only the hydrogen components in the hydrogen-rich gas in the first chamber to the second chamber. As a result, hydrogen-rich gas with an increased hydrogen concentration is supplied to the anode of the fuel cell from the second chamber. The residual gas in the first chamber following the removal of the hydrogen components is supplied to a burner or the like. Anode effluent which is discharged from the anode of the fuel cell during power generation still contains a considerable amount of hydrogen. This anode effluent is led through a recirculation passage to the second chamber of the permeation device, mixed with the hydrogen which has passed through the hydrogen permeable membrane, and re-supplied to the anode.

EP 0692835 A2 describes a fuel cell generator and a method for detecting and cancelling poisoning of an electrocatalyst in a fuel cell without delay. An electronic control unit receives detection signals from inlet and outlet temperature sensors of first channels for gaseous fuel and estimates a degree of poisoning of electrocatalyst on an anode based on the detection signal. When determining that the electrocatalyst is poisoned, the electronic control unit controls on and off solenoid valves to change the flow direction of the gaseous fuel through the first channels. This allows a place with electrocatalyst poisoning to be exposed to the gaseous fuel having a relatively low concentration of carbon monoxide.

EP 0596366 A1 relates to a method of collecting water and inert gas on a cathode side and/or inert gas on the anode side from a block with a number of fuel cells. In order to achieve this, the water and the inert gas part in a cathode side gas mixture, respectively the inert gas part in an anode side gas mixture will be concentrated in the flow direction of the respective gas mixtures and at least partially discharged from the block.

### SUMMARY OF THE INVENTION

If pinholes appear in the hydrogen separating membrane, molecules of impurity gases such as carbon monoxide, methane, and carbon dioxide which are contained in the hydrogen-rich gas in the first chamber and which are larger than hydrogen molecules pass through the hydrogen separating membrane into the second chamber. Due to the manufacturing methods of hydrogen separating membranes, however, it is difficult to avoid the occurrence of pinholes. As a result, the concentration of impurity gases in a recirculation passage rises as the duration of power generation in the fuel cell increases.

This increase in impurity gas concentration causes a reduction in the hydrogen partial pressure of the hydrogen-rich gas supplied to the anode, and thus the power generating efficiency of the fuel cell deteriorates. Further, the carbon monoxide within the impurity gas poisons the anode catalyst and inhibits hydrogen ionization.

In a fuel cell power plant which uses reformate gas processed from hydrocarbon fuels such as methanol or gasoline, the concentration of the impurity gas in the reformate gas is high, thereby aggravating this problem. Even in a fuel cell power plant which uses hydrogen gas that is purified in advance, the production of 100% pure hydrogen gas is impossible, and hence the same problem, although to a differing extent, cannot be avoided.

Increases in the impurity gas concentration in the recirculation passage mainly occur due to the impure components in the hydrogen-rich gas supplied to the first chamber and concentrated during the process of the aforementioned hydrogen permeation and anode effluent recirculation. However, impurity gas such as nitrogen in the air which is supplied to the cathode also permeates the electrolyte membrane to the anode even though the permeation amount is small. Moreover, when the hydrogen-rich gas which is supplied to the anode is humidified, water vapor is inevitably produced. This water vapor also accumulates in the recirculation path as impurity gas. In order to prevent such increases in impurity gas concentration, the recirculation of the anode effluent must be interrupted occasionally for purging the anode effluent in which impurity gas content has become high.

However, since the anode effluent contains a large amount of hydrogen, purging causes an increase in loss of the fuel which is the raw material of the hydrogen-rich gas. Further, the anode effluent contains a large amount of hydrogen, which is a flammable gas, and therefore cannot be released directly into the atmosphere and must be processed by combustion or the like. In order to burn the anode effluent, additional equipment is necessary.

It is therefore an object of this invention to reduce the hydrogen concentration of purged anode effluent during purging for preventing increases in impurity gas concentration.

In order to achieve the above objects, this invention provides a fuel cell power plant comprising a fuel cell stack for performing power generation by means of an electrochemical reaction between hydrogen contained in hydrogen-rich gas which is supplied to an anode and oxygen which is supplied to a cathode. The fuel cell stack comprises a stacked body of a plurality of fuel cells each of which outputs an electrical current in accordance with an electrochemical reaction amount.

The power plant further comprises an adjustment mechanism which adjusts a flow rate of the hydrogen-rich gas supplied to the anode or an output current of the fuel cell stack, a sensor which detects a concentration of impurity gas contained in the hydrogen-rich gas, and a controller functioning to determine if a concentration of the impurity gas has reached a predetermined concentration, and control the adjustment mechanisms to cause an entire amount of the hydrogen supplied to the anode to be expended in power generation by the fuel cell stack, when the concentration of the impurity gas has reached the predetermined concentration.

This invention also provides a control method of a power plant that comprises a fuel cell stack for performing power generation by means of an electrochemical reaction between hydrogen contained in hydrogen-rich gas which is supplied to an anode and oxygen which is supplied to a cathode, and an adjustment mechanism which adjusts a flow rate of the hydrogen-rich gas supplied to the anode or an output current of the fuel cell stack. The fuel cell stack comprises a stacked body of a plurality of fuel cells each of which outputs an electrical current in accordance with an electrochemical reaction amount.

The control method comprises detecting a concentration of impurity gas contained in the hydrogen-rich gas, determining if a concentration of the impurity gas has reached a predetermined concentration, and controlling the adjustment mechanisms to cause an entire amount of the hydrogen supplied to the anode to be expended in power generation by the fuel cell stack, when the concentration of the impurity gas has reached the predetermined concentration.

The details as well as other features and advantages of this invention are set forth in the remainder of the specification and are shown in the accompanying drawings.

### BRIEF DESCRIPTION OF THE DRAWINGS

FIG. 1 is a schematic diagram of a fuel cell power plant according to this invention.

FIG. 2 is a diagram illustrating the effect on the performance of a fuel cell of impurity gas supplied to the anode of the fuel cell.

FIG. 3 is a flowchart illustrating an anode effluent purging control routine which is executed by a controller according to this invention.

FIG. 4 is a flowchart illustrating the main parts of an anode effluent purging control routine which is executed by a controller according to a second embodiment of this invention.

FIG. 5 is similar to FIG. 3, but showing a third embodiment of this invention.

FIG. 6 is similar to FIG. 3, but showing a fourth embodiment of this invention.

FIG. 7 is a schematic diagram of a fuel cell power plant according to a fifth embodiment of this invention.

FIG. 8 is a flowchart illustrating an anode effluent purging control routine which is executed by a controller according to the fifth embodiment of this invention.

FIG. 9 is a schematic diagram of a fuel cell power plant according to a sixth embodiment of this invention.

FIGs. 10A and 10B are flowcharts illustrating an anode effluent purging control routine executed by a controller according to the sixth embodiment of this invention.

FIG. 11 is a schematic diagram of a fuel cell power plant according to a seventh embodiment of this invention.

FIG. 12 is a schematic diagram of a fuel cell power plant according to an eighth embodiment of this invention.

### DESCRIPTION OF THE PREFERRED EMBODIMENTS

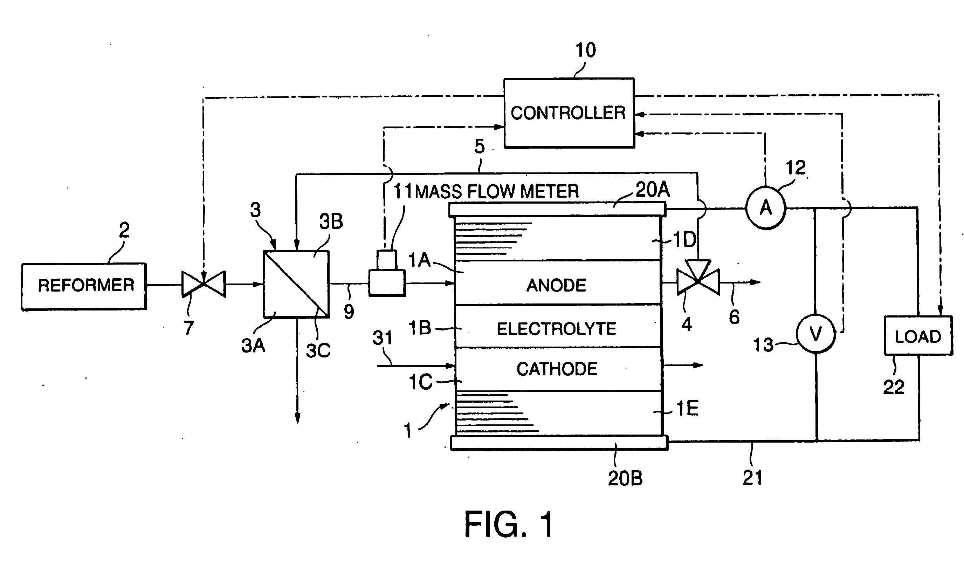

Referring to FIG. 1 of the drawings, a fuel cell stack 1 of a fuel cell power plant is constituted by a stacked body of a large number of fuel cells connected in series. Each fuel cell is constituted by an electrolyte membrane 1B interposed between an anode 1A and a cathode 1C, and electrically conductive separators 1D and 1E disposed on the outsides of the anode 1A and cathode 1C. It should be noted that for the purpose of explanation, the fuel cell stack 1 in the drawing illustrates the constitution of a single fuel cell, but an actual fuel cell stack 1 is constituted by a stacked body in which these fuel cells are connected in series, and metallic terminals 20A and 20B for extracting an electric current are provided on the two ends of the stacked body.

The fuel cell stack 1 generates power by means of the reaction of hydrogen in the hydrogen-rich gas which is supplied to the anode 1A and oxygen in the air which is supplied to the cathode 1C.

Hydrogen-rich gas is produced by a reformer 2 and a hydrogen separator 3. The reformer 2 produces reformate gas containing a large amount of hydrogen by reforming ethanol or gasoline. The reformate gas flows into a first chamber 3A of the hydrogen separator 3 through a flow control valve 7.

The hydrogen separator 3 is constituted by a first chamber 3A and a second chamber 3B which is partitioned from the first chamber 3A by a hydrogen permeable membrane 3C. The hydrogen permeable membrane 3C has a quality which allows only the permeation of small-dimension hydrogen molecules and disallows the permeation of other gas molecules with larger dimensions than hydrogen molecules. This type of hydrogen permeable membrane has become well-known through the aforementioned Tokkai 2001-23673.

Thus only the hydrogen in the reformate gas which is supplied to the first chamber 3A passes through the hydrogen permeable membrane 3C to reach the second chamber 3B. The residual components are released into the atmosphere from the first chamber 3A.

The hydrogen which passes through the hydrogen permeable membrane 3C to reach the second chamber 3B is supplied to the anode 1A of the fuel cell stack 1 as hydrogen-rich gas via a hydrogen supplying passage 9. The cathode 1C of the fuel cell stack 1 is supplied with air of a predetermined pressure from an air supplying passage 31.

In the fuel cell stack 1, power is generated by the reaction of the hydrogen in the hydrogen-rich gas supplied to the anode 1A and the oxygen in the air supplied to the cathode 1C.

After expending hydrogen for the reaction, the residual gas is discharged from the anode 1A. This gas shall be referred to as anode effluent. The anode 1A is supplied with a greater amount of hydrogen than is necessary for a power generation reaction, and therefore a large amount of hydrogen is still contained in the anode effluent.

In order to reuse the hydrogen in the anode effluent, a recirculation passage 5 is connected to the anode effluent outlet of the fuel cell stack 1 via a three-way valve 4. The three-way valve 4 functions to switch between two positions, a purge running position for releasing the anode effluent into the atmosphere through an exhaust passage 6, and a normal running position for allowing the anode effluent to flow into the recirculation passage 5. The recirculation passage 5 is connected to the second chamber 3B of the hydrogen separator 3.

A load 22 is connected to the terminals 20A and 20B of the fuel cell stack 1 via an electrical circuit 21. The load 22 comprises an alternating current motor and inverter, a secondary battery, auxiliaries, and a power management unit for controlling the power supply to these components.

The switching of the three-way valve 4, the adjustment of the opening of the flow control valve 7, and the current supply to the load 22 are each controlled in accordance with signals output from a controller 10.

The controller 10 is constituted by a microcomputer comprising a central processing unit (CPU), read-only memory (ROM), random access memory (RAM), and an input/output interface (I/O interface). The controller 10 may be constituted by a plurality of microcomputers.

Theoretically, the hydrogen separating membrane 3C only allows the permeation of hydrogen, but in actuality pinholes tend to form during the manufacturing process of the hydrogen separating membrane 3C, and when pinholes occur, impurity gases in the reformate gas flow into the second chamber 3B in minute quantities. Thus the hydrogen-rich gas separated by the separator 3 contains minute quantities of impurity gases such as carbon monoxide, carbon dioxide, and methane. However, only hydrogen components are expended in the power generation reaction in the anode 1A, and hence, as anode effluent continues to recirculate through the recirculation passage 5, the concentration of the impurity gases contained in the circulating gas gradually rises.

When hydrogen-rich gas is supplied to the anode 1A at a constant pressure while operating the fuel cell stack 1, the partial pressure of the hydrogen in the hydrogen-rich gas decreases as the impurity gas concentration of the hydrogen-rich gas increases, and thereby, the power generating efficiency of the fuel cell stack 1 deteriorates. Further, carbon monoxide in the impurity gas poisons the electrode catalyst of the anode 1A and the poisoned electrode catalyst causes a further reduction in the power generating efficiency of the fuel cell stack 1.

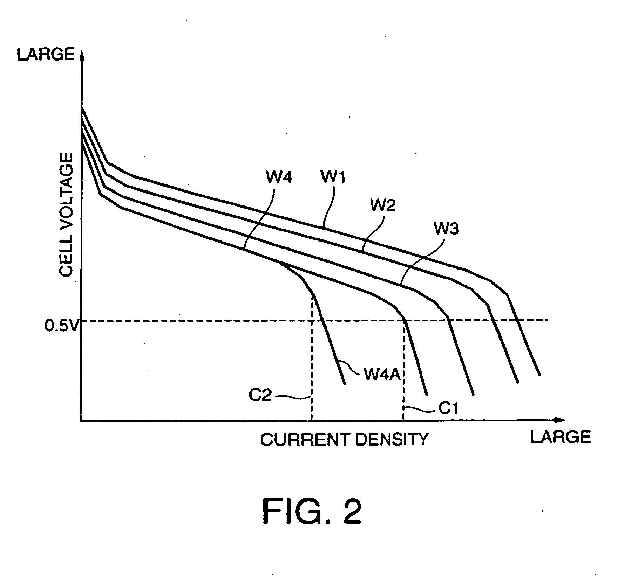

Referring to FIG. 2, the curved line W1 illustrates the relationship between the current density and cell voltage of a single fuel cell in a full load state when pure hydrogen is supplied to the anode 1A. Here, the current density is the value of the load current divided by the surface area of the reaction surface, of the fuel cell. If the fuel cell stack 1 operates continually while the anode effluent is recirculated, the impurity gases in the hydrogen-rich gas increase, and thus the fuel cell performance gradually deteriorates in the manner shown by the curved lines W2, W3, W4. Here, the curved line W4 illustrates fuel cell performance when the impurity gas concentration has reached the upper limit of allowable concentration.

There are various methods, such as the following, for defining the upper limit of allowable concentration.

First, it may be defined as the maximum impurity gas concentration under which a rated current can be supplied from the fuel cell stack 1 at a voltage required by the load.

Further, since deterioration in the output voltage of the fuel cell stack 1 due to impurity gas leads to an increase in fuel consumption in the power plant, the upper limit of allowable impurity gas concentration may also be defined by the amount of fuel consumed.

As noted above, carbon monoxide concentration poisons the electrode catalyst of the fuel cell stack 1, leading to a reduction in power generating efficiency. However, this poisoning is eradicated by supplying hydrogen-rich gas with a high degree of purity. Hence, the carbon monoxide concentration at a position of equilibrium between poisoning and eradication of poisoning may be determined experientially, and this concentration may be defined as the upper limit of allowable impurity gas concentration.

The upper limit of allowable concentration is preferably determined by considering the values acquired by these various methods as a whole.

The fuel cell voltage is maximum when the current density is zero and decreases as the current density rises. In a comparison of the curved lines W1 through W4, voltage decrease becomes pronounced in the region where the current density is high. This is because the amount of hydrogen supplied to the electrode surface is insufficient for a reaction, and hence the partial pressure of the hydrogen in the electrode decreases. This voltage decrease shall be referred to as a voltage decrease due to diffusion overpotential. It should be noted that the performance lines W1 through W4 in the drawing differ slightly depending on the temperature and pressure during operation of the fuel cell stack 1.

In order to restore the performance of the fuel cell, which deteriorates as operating time elapses, the controller 10 switches the three-way valve 4 from the normal running position to the purge running position according to necessity such that the anode effluent is released into the atmosphere. The release of anode effluent into the atmosphere from the purge running position shall be referred to as purging. In order to avoid the release of hydrogen gas in the anode effluent into the atmosphere during purging, the controller 10 increases the power generating load on the fuel cell stack 1 as the anode effluent is purged such that all or substantially all of the hydrogen in the hydrogen-rich gas which is supplied to the anode 1A is expended in power generation.

For the purposes of this control, a mass flow meter 11 for detecting the mass flow rate of the hydrogen-rich gas supplied to the anode 1A, an ammeter 12 for detecting the output current of the fuel cell stack 1, and a voltmeter 13 for detecting the output voltage of the fuel cell stack 1 are respectively provided. The detection values thereof are respectively input into the controller 10 as signals.

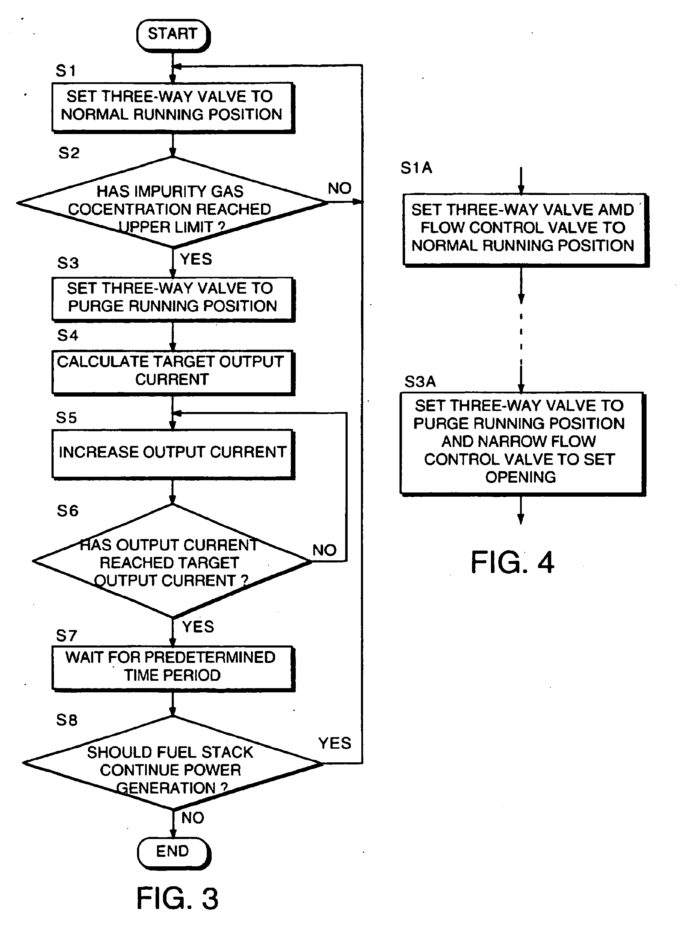

Next, an anode effluent purging control routine which is executed by the controller 10 in order to perform this control will be described with reference to FIG. 3. This routine commences when the fuel cell stack becomes capable of power generation, and is executed continuously until operation of the fuel cell stack 1 ceases.

First, in a step S1, the controller 10 sets the position of the three-way valve 4 to normal running position so that the fuel cell stack 1 generates power while recirculating the anode effluent. Also, the opening of the flow control valve 7 is set such that an amount of hydrogen-rich gas which exceeds a corresponding amount of current consumed by the load 22 is supplied to the anode 1A of the fuel cell stack 1.

Then, in a step S2, a determination is made according to the following method as to whether or not the concentration of impurity gas in the hydrogen-rich gas supplied to the anode 1A has reached the upper limit of allowable concentration.

More specifically, the current detected by the ammeter 12 is divided by the surface area of the reaction surface of each fuel cell constituting the fuel cell stack 1 to thereby calculate the current density. Further, by dividing the voltage detected by the voltmeter 13 by the number of fuel cells in the fuel cell stack 1, the output voltage per fuel cell is calculated. The current density and output voltage per fuel cell are then plotted on the diagram shown in FIG. 2. If the plotted point in FIG. 2 is positioned above the curved line W4 which corresponds to the upper limit of allowable concentration, it is determined that the concentration of impurity gas is less than the upper concentration limit. If the point is on or below the curved line W4, it is determined that the impurity gas concentration has reached or exceeded the upper limit of allowable concentration.

For the purposes of this determination, a map, table or mathematical expressions corresponding to the curved line W4 are stored in advance in the memory of the controller 10. On the basis of the current density and using the map, table, or mathematical expressions stored in memory, the controller 10 calculates the output voltage per fuel cell on the curved line W4 corresponding to the current density. If the output voltage per fuel cell determined from the voltage detected by the voltmeter 13 exceeds the output voltage per fuel cell on the curved line W4, it is determined that the impurity gas concentration has not reached the upper limit of allowable concentration. If the output voltage per fuel cell determined from the voltage detected by the voltmeter 13 does not exceed the output voltage per fuel cell on the curved line W4, it is determined that the impurity gas concentration has reached the upper limit of allowable concentration.

Instead of performing determination of impurity gas concentration on the basis of the output current and output voltage of the fuel cell stack 1 in this manner, a CO sensor may be provided on a part of the anode effluent recirculation path formed by the chamber 3B, the hydrogen supplying passage 9, the anode 1A, and the recirculation passage 5 such that the concentration of impurity gas in the hydrogen-rich gas may be directly detected.

When, as a result of this determination the concentration of impurity gas in the hydrogen-rich gas has not reached the upper limit of allowable concentration, the controller 10 continues the power generation in the fuel cell stack 1 in normal running mode according to the step S1 and determination of the impurity gas concentration according to the step S2.

If, in the step S2, it is determined that the impurity gas concentration has reached the upper limit of allowable concentration, the controller 10 switches the three-way valve 4 to the purge running position in a step S3 to commence the release of anode effluent into the atmosphere.

Then, in a step S4, a target output current value for the fuel cell stack 1 is set. This target output current value is set according to the following method on the basis of the mass flow rate of the hydrogen-rich gas detected by the mass flow meter 11.

If the mass flow rate of the hydrogen-rich gas supplied to the anode 1A from the hydrogen separator 3 is divided by the mass of 1 mole (= molecular weight) of hydrogen under standard conditions, the molar flow rate *n* mols/sec of the hydrogen-rich gas is obtained. In this calculation, the hydrogen-rich gas is considered as pure hydrogen, when in fact impurity gases are contained in the hydrogen-rich gas. However, even when the hydrogen gas contains an allowable concentration of impurity gas, the proportion of impurity gas is approximately 1% and therefore minute in comparison with the proportion of hydrogen. It is therefore permissible to consider hydrogen-rich gas as approximately pure hydrogen when calculating the mass flow rate of hydrogen-rich gas.

The power generating current of the fuel cell stack 1 for which all of the *n* mols/sec hydrogen is expended is logically expressed by 2 *n F* ampere. Here, *F* is a Faraday constant. The controller 10 sets the target output current value as equal to this 2 *n F* ampere.

Next, in a step S5, the controller 10 operates the aforementioned power managing unit by means of signal output to the load 22 to increase the load current, or in other words the output current of the fuel cell stack 1, by a predetermined amount.

Then, in a step S6, the output current of the fuel cell stack 1 following this increase is compared with the target output current value. The processing in steps S6 and S7 is then repeated until the actual output current of the fuel cell stack 1, detected by the ammeter 12, reaches the target output current value.

If it is determined in the step S6 that the actual output current of the fuel cell stack 1 has reached the target output current value, the controller 10 waits for a predetermined time period in a step S7. During this waiting period, the three-way valve 4 is held at the purge running position and the anode effluent is purged. After the predetermined time period has elapsed, in a step S8, the controller 10 determines if the fuel cell stack 1 should continue power generation.

This determination is performed on the basis of signals from a key switch (not shown) which commands the fuel cell stack 1 to commence and halt operations.

If the fuel cell stack 1 has not been ordered to halt operations, that is if the fuel cell stack 1 should continue to generate power, the controller 10 returns to the step S1 and repeats the aforementioned control. If the fuel cell stack 1 has been commanded to halt operations, that is if the fuel cell stack 1 should stop power generation, the controller 10 terminates the routine.

According to the execution of this routine, substantially all of the hydrogen-rich gas is expended in the power generation of the fuel cell stack 1 during purging, and thus most of the anode effluent which is released into the atmosphere from the exhaust passage 6 is impurity gas. Accordingly, there is no need to provide a burner or the like for processing hydrogen in the anode effluent which is discharged through purging. Also, since substantially all of the hydrogen gas is expended in the power generation reaction during purging, a high power generation efficiency is obtained.

In this routine, the opening of the flow control valve 7 is calculated in another routine in accordance with the power generating current of the fuel cell stack 1 which is required by the load 22. Hence the opening of the flow control valve 7 during the execution of purging is not constant and the target output current value during purging is calculated from the hydrogen-rich gas mass flow rate detected by the mass flow meter 11.

Also in this routine, reformate gas is supplied to the hydrogen separator 3 in the same amount during purging as in the normal running position, and this reformate gas is supplied to the anode 1A via the hydrogen permeable membrane 3C as hydrogen-rich gas. This hydrogen-rich gas causes an action for scavenging residual impurity gas in the second chamber 3B, hydrogen supplying passage 9 and anode 1A.

Referring to FIG. 4, a second embodiment of this invention will be described.

In the first embodiment, the output current of the fuel cell stack 1 during purging is increased beyond the output current during normal operations. Depending on the constitution or condition of the load 22, however, it is sometimes difficult to increase the output current. In this type of power plant, it is preferable for the controller 10 to narrow the degree of opening of the flow control valve 7 upon commencement of purging so as to reduce the reformate gas flow rate.

This embodiment corresponds to such a case, and the controller 10 executes processing for a step S1A in place of the step S1 in the first embodiment, and processing for a step S3A in place of the step S3. Processing in the other steps is identical to that of the first embodiment.

In the step S1A the three-way valve 4 and flow control valve 7 are each set at the normal running position. If purging has been performed up to this point, this operation signifies returning the three -way valve 4 from the purge running position to the normal running position and returning the flow control valve 7 from the set opening for a purge operation to the opening during normal operations. The set opening for a purge operation is set smaller than the opening during normal operations.

In the step S3A, the three-way valve 4 is switched to the purge running position and the flow control valve 7 is narrowed to the set opening for a purge operation from the opening during normal operations.

When the opening of the flow control valve 7 is narrowed to the set opening during purging in this manner, the target output current value calculated in the following step S4 becomes a constant value at all times. Therefore, in this case the mass flow meter 11 may be omitted and the calculation in the step S4 may also be omitted.

By narrowing the degree of opening of the flow control valve 7 in the step S3A, the output current of the fuel cell stack 1 is reduced. As a result, the target output current value may become smaller than the actual output current value prior to narrowing of the degree of opening of the flow control valve 7. The target output current value is the maximum power generating current of the fuel cell stack 1 when the opening of the flow control valve 7 is narrowed, and by narrowing the opening of the flow control valve 7, the actual output current value falls to or below the target current value. Hence in this embodiment also, the output current value of the fuel cell stack 1 is increased to the target current value in the steps S5 and S6.

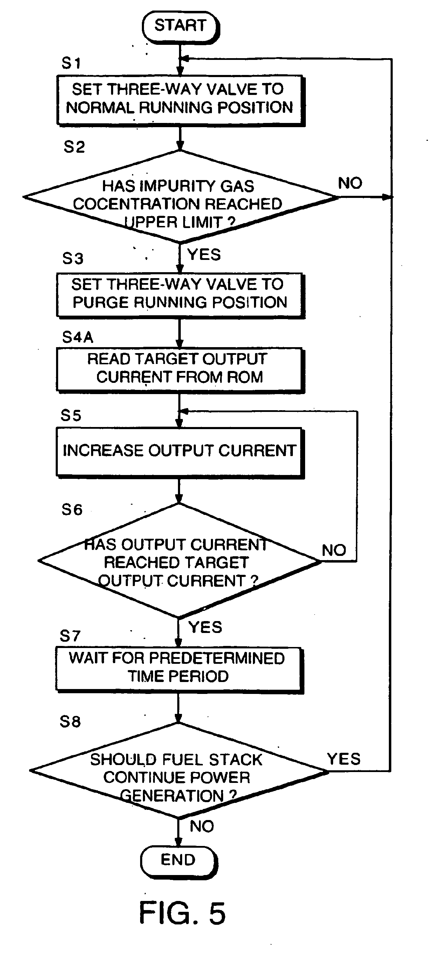

Referring to FIG. 5, a third embodiment of this invention will be described.

Regarding the hardware in this embodiment, the mass flow meter 11 has been omitted from the constitution of the first embodiment in FIG. 1. Regarding the processing of the controller 10, the method of setting the target output current value during purging differs from the first embodiment.

The controller 10 performs processing in a step S4A in place of step S4 in the first embodiment. The processing in the other steps is identical to that of the first embodiment.

In the step S4A, a value which is written to the ROM in advance on the basis of the fuel cell performance is applied as the target output current value.

The target current value written in the ROM is set on the basis of the diffusion overpotential tendency of the fuel cell. In other words, on the curved line W4 in FIG. 2 which corresponds to the upper limit of allowable concentration, a current value corresponding to the current density *C1* at which the output voltage of the fuel cell drastically decreases due to the influence of diffusion overpotential is set as the target current value. The drastic decrease in the output voltage of the fuel cell signifies that insufficient hydrogen for a power generation reaction has been supplied to the anode 1A. In this state, substantially all of the supplied hydrogen is expended in the power generation reaction. Thus, if the output current of the fuel cell stack 1 during purging is increased to the current value corresponding to *C1*, hydrogen can be prevented from remaining in the anode effluent.

As noted previously, however, lines W1 - W4 in FIG. 2 indicate performance in a full load state. When the opening of the flow control valve 7 is narrowed, the hydrogen supply amount decreases and the fuel cell stack 1 enters a partial load state. The region in which diffusion overpotential becomes pronounced on the curved line W4 changes as is shown on curved line W4A in the drawing. Thus in this case, the target output current value is set to a current value corresponding to the current density *C2* at which the output voltage of the fuel cell according to the curved line W4A drastically decreases due to the influence of diffusion overpotential. In so doing, the target output current value can be determined depending only on the opening of the flow control valve 7. When the opening of the flow control valve 7 is controlled by the controller 10, the opening of the flow control valve 7 is data which is known to the controller 10, and therefore the target output current value can be determined without detecting the mass flow rate of the hydrogen-rich gas using the mass flow meter 11.

Hence, when purging is executed with a specific opening of the flow control valve 7 at all times, the target output current value which is written into the ROM can be set as a fixed value. In this case, the processing of the step S4A simply consists of reading the value written in the ROM. When purging is performed with an arbitrary opening of the flow control valve 7, on the other hand, a map of the target output current value altering in accordance with the opening of the flow control valve 7 is written into the ROM, and in the step S4A the map is referred to on the basis of the opening of the flow control valve 7 so as to dynamically set the target output current value.

According to this embodiment, the mass flow meter 11 may be omitted, and hence the constitution of the device for achieving the object of the invention is simplified.

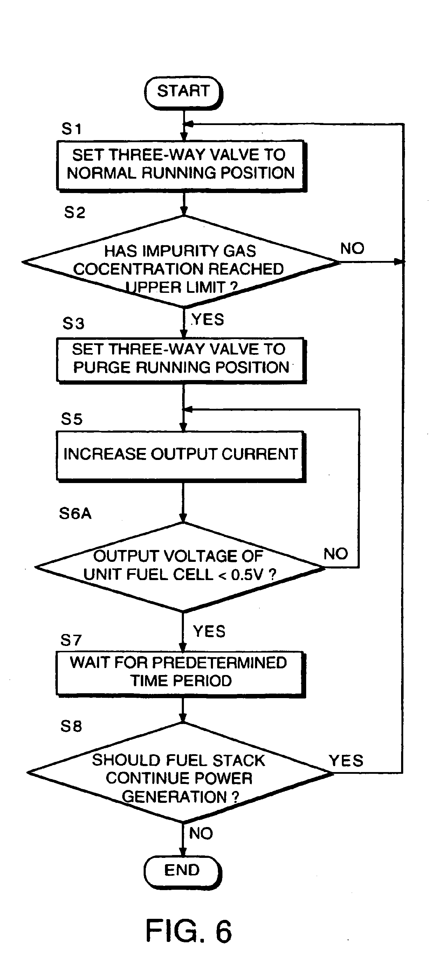

Referring now to FIG. 6, a fourth embodiment of this invention will be described.

Similarly to the third embodiment, the mass flow meter 11 is also omitted in this embodiment, and as regards the processing of the controller 10, the step S4A of the third embodiment for setting the target output current value is also omitted. In place of the step S6 in the third embodiment, processing in a step S6A is performed. Processing in the other steps is identical to that of the third embodiment.

In this embodiment, a target output current value is not set. In the step S6A, the output voltage per fuel cell is calculated from the output voltage detected by the voltmeter 13 and a determination is made as to whether this output voltage reaches 0.5 volts (V) or not. On the curved line W4 in FIG. 2, this value corresponds to the voltage when the output voltage of the fuel cell decreases drastically. It should be noted, however, that this value differs according to the fuel cell characteristic and is therefore set experientially in advance.

This embodiment corresponds to the case in the third embodiment where the target current value is fixed at a value corresponding to the current density *C1*. The constitution of the device for achieving the object of the invention may also be simplified according to this embodiment.

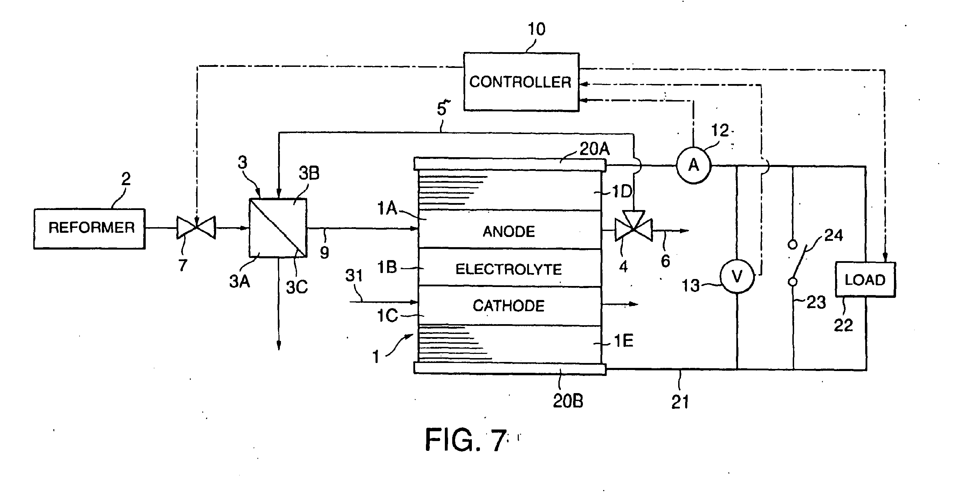

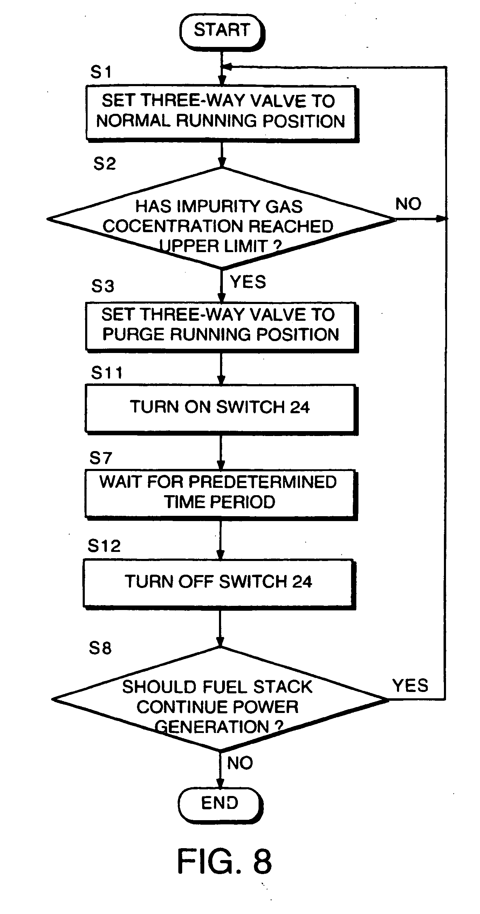

Referring to FIGs. 7 and 8, a fifth embodiment of this invention will be described.

As is illustrated in FIG. 7, in this embodiment the mass flow meter 11 from the first embodiment has been omitted and a short circuit 23 with a switch 24 is newly provided. In the first embodiment, the controller 10 increases the output current of the fuel cell stack 1 by operating the power managing unit of the load 22, whereas in this embodiment, the output current of the fuel cell stack 1 is increased by turning the switch 24 on and short-circuiting the short circuit 23.

If the output current of the fuel cell stack 1 becomes excessive when the switch 24 is turned on, the increase range of the output current can be adjusted by connecting resistance in series with the switch 24.

The controller 10 executes the routine shown in FIG. 8 instead of the routine of the first embodiment shown in FIG. 3.

In the routine in FIG. 8, the steps S4 through S6 of the routine in FIG. 3 are omitted, and in place thereof a step S11 is provided. Also, a step S12 is provided between the steps S7 and S8. The processing in the steps S1 through S3 and the steps S7 and S8 is identical to that of the first embodiment.

In the step S11, the controller 10 turns the switch 24 on by means of signal output. When the switch 24 is turned on, the short circuit 23 is short-circuited and thus the output current of the fuel cell stack 1 increases.

After this state has continued for a predetermined time period in the step S7, the controller 10 turns the switch 24 off in the step S12.

While waiting for the predetermined time period in the step S7, the fuel cell stack 1 consumes all of the hydrogen supplied to the anode 1A in order to cover the increased output current. When the surplus hydrogen is thus expended, the output voltage of the fuel cell stack 1 decreases and the output current also decreases. Accordingly, the switch 24 may be turned off by monitoring the decreases in the voltage and current rather than waiting for a predetermined time period.

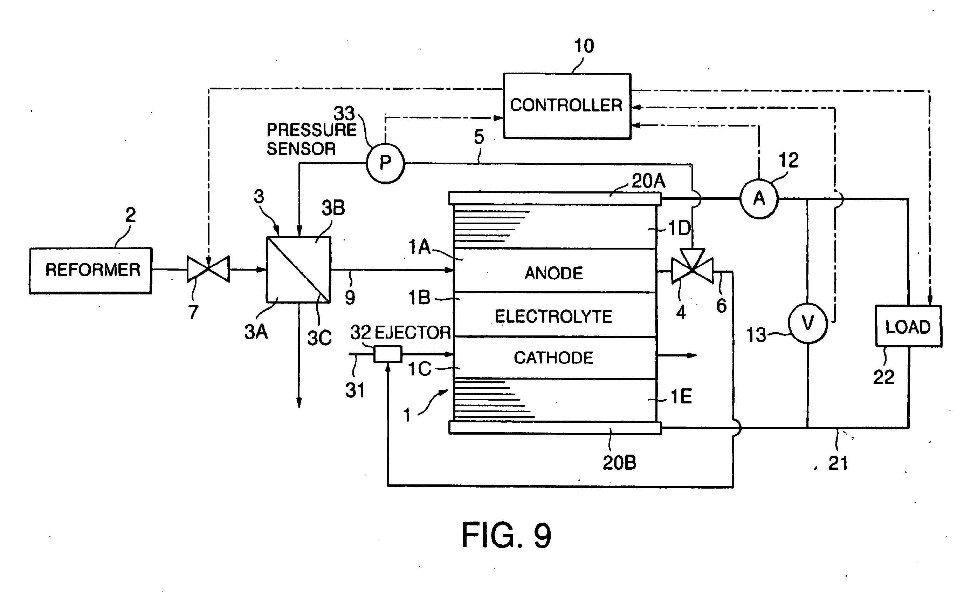

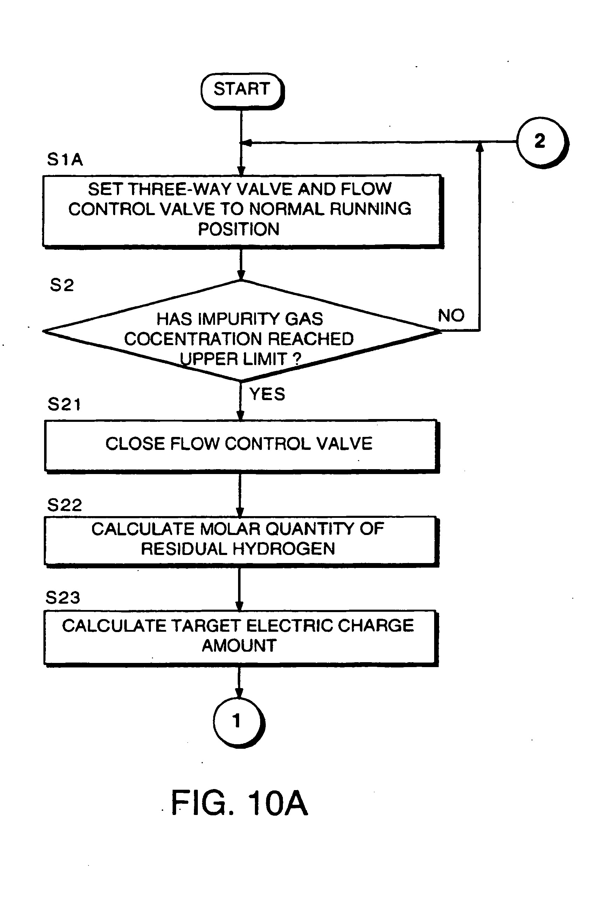

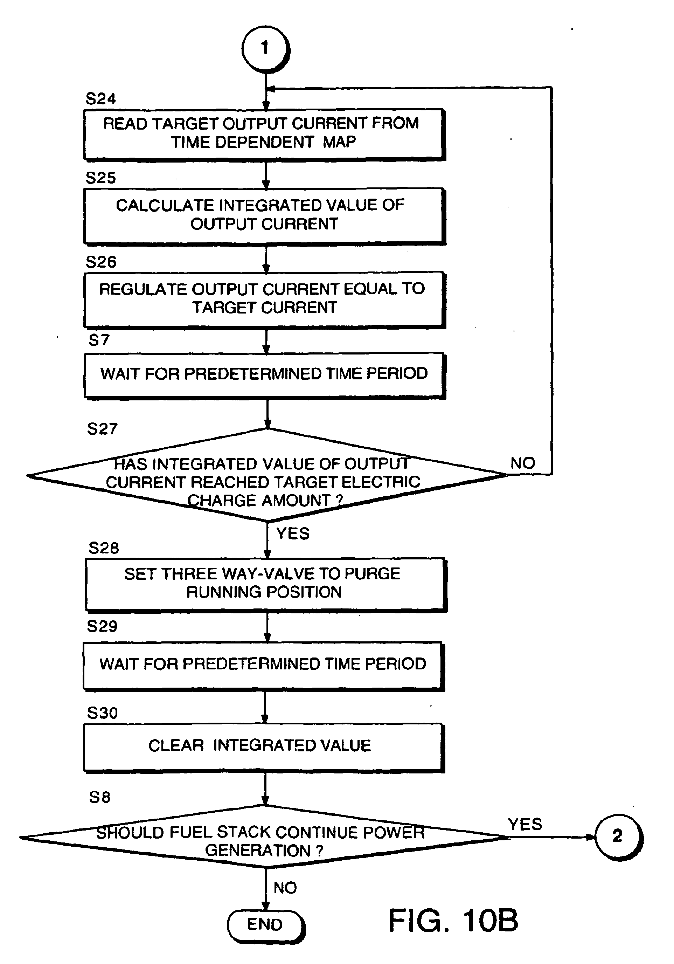

Referring to FIG. 9 and FIGs 10A, 10B, a sixth embodiment will be described.

In this embodiment, the exhaust passage 6 does not open onto the atmosphere but, as is illustrated in FIG. 9, is connected to the air supplying passage 31 for supplying air to the cathode 1C via an ejector 32. As noted previously, the output current of the fuel cell stack 1 is increased during purging, and hence the hydrogen concentration in the anode effluent decreases greatly. It is, however, possible for a small amount of hydrogen to remain in the anode effluent. In this embodiment, by leading the anode effluent to the cathode 1C, the residual hydrogen in the anode effluent is oxidized by oxygen in the cathode 1C.

For this purpose, in this embodiment the exhaust passage 6 of the first embodiment is merged with the air supplying passage 31 via the ejector 32. Further, the mass flow meter 11 of the first embodiment is omitted and the recirculation passage 5 is provided with a pressure sensor 33. The pressure detected by the pressure sensor 33 is input into the controller 10 as a signal. Otherwise, the constitution of the hardware relating to the purging of anode effluent is identical to that of the first embodiment.

The controller 10 executes the routine shown in FIGs. 10A and 10B instead of the routine of FIG. 3 as the anode effluent purging control routine.

First, in the step S1A, the controller 10 sets the three -way valve 4 and flow control valve 7 to their respective normal running positions.

In the next step S2, a similar determination is made to that in the first embodiment as to whether the concentration of impurity gas in the hydrogen-rich gas has reached the upper limit of allowable concentration or not. The controller 10 repeats the processing of steps S1A and S2 until the impurity gas concentration reaches the upper limit of allowable concentration.

When the impurity gas concentration has reached the upper limit of allowable concentration, the controller 10 closes the flow control valve 7 in a step S21.

As a result, the supply of reformate gas to the chamber 3A is halted and only the anode effluent in the anode effluent recirculation path comprising the recirculation passage 5, chamber 3B, and hydrogen supplying passage 9 is supplied to the anode 1A.

In a next step S22, the controller 10 calculates the molar quantity of the residual hydrogen in the anode effluent recirculation path. This calculation is expressed by the product of the total capacity of the anode effluent recirculation path and the hydrogen partial pressure of the anode effluent recirculation path.

The hydrogen partial pressure is estimated from the pressure in the anode effluent recirculation path which is detected by the pressure sensor 33 and the output voltage per fuel cell which is calculated from the voltage detected by the voltmeter 13 immediately prior to the execution of the step S21.

In a next step S23, the controller 10 calculates a target electric charge amount for the fuel cell stack 1 during a purge operation. The target electric charge amount is determined by multiplying the Faraday constant with the molar quantity of residual hydrogen.

In a next step S24, the controller 10 reads the target current value corresponding to the amount of time elapsed following the commencement of a purge operation from a time dependent map stored in the ROM in advance. This map is set experientially on the basis of changes in the output current of the fuel cell stack 1 during a purge operation.

In a next step S25, the actual output current of the fuel cell stack 1 detected by the ammeter 12 is time-integrated.

In a next step S26, the controller 10 operates the aforementioned power managing unit so that the output current of the fuel cell stack 1 becomes equal to the target current value.

In the next step S7, the controller 10 waits for a predetermined time period.

In a next step S27, the controller 10 determines whether the current integral value has reached the target electric charge amount. This determination indicates whether or not the residual hydrogen in the anode effluent recirculation path has been expended for power generation. If the current integral value of the residual hydrogen has not reached the target electric charge amount, the controller 10 repeats the processing in the steps S24 through S27.

If the integral value of the current has reached the target electric charge amount, the controller 10 switches the three -way valve 4 to the purge running position in a step S28. The anode effluent then flows into the air supplying passage 31 via the ejector 32. The ejector 32 uses the air pressure of the air supplying passage 31 to ensure that the anode effluent is recirculated into the air supplying passage 31.

In a next step S29, the controller 10 waits for a predetermined time period. In a next step S30, the controller 10 clears the integrated value of the current.

In the next step S8, a determination is made as to whether the fuel cell stack 1 should continue power generation. If the determination result is affirmative, the controller 10 returns to the step S1A and repeats the above control. If the determination result is negative, the controller 10 terminates the routine.

In this embodiment, substantially all of the hydrogen in the anode effluent is used for power generation until the controller 10 switches the three-way valve 4 to the purge running position in the step S28. Thus, almost all of the anode effluent at the beginning of a purge operation consists of impurity gases such as carbon monoxide, carbon dioxide, and methane.

In this embodiment, such anode effluent is mixed with the air which is supplied to the cathode 1C, and therefore these impurity gases are oxidized and discharged from the cathode 1C as harmless components. Even if hydrogen remains in the anode effluent, this hydrogen is oxidized in the cathode 1C and discharged as a noncombustible substance.

In the step S25 of this embodiment, the integral value of the output current of the fuel cell stack 1 is calculated and a determination is made on the basis of this current integral value as to whether the residual hydrogen in the anode effluent circulation path has been completely expended. However, it is also possible in this embodiment, as in the first embodiment, to expend the residual hydrogen in the anode effluent circulation path by controlling the output current of the fuel cell stack 1 to a set target output current value and then maintaining this state for a predetermined time period. That is, the steps S4 through S7 may be applied in place of the steps S24 through S27.

All of the aforementioned first through sixth embodiments relate to a fuel cell power plant in which hydrogen-rich gas purified from reformate gas is supplied to the fuel cell stack 1.

However, this invention may also be applied to a fuel cell power plant in which hydrogen purified in advance is supplied to the fuel cell stack 1. In a case where pre-purified hydrogen with a high degree of purity is supplied to the fuel cell stack 1, and anode effluent is recirculated through the recirculation passage 5, similar problems to a power plant which uses reformate gas arise in that the concentration of impurity gases in the hydrogen supplied to the fuel cell stack 1 increases as the power plant continues to operate.

A seventh embodiment and eighth embodiment of this invention, which will now be described, are embodiments in which this invention is applied to this type of fuel cell power plant.

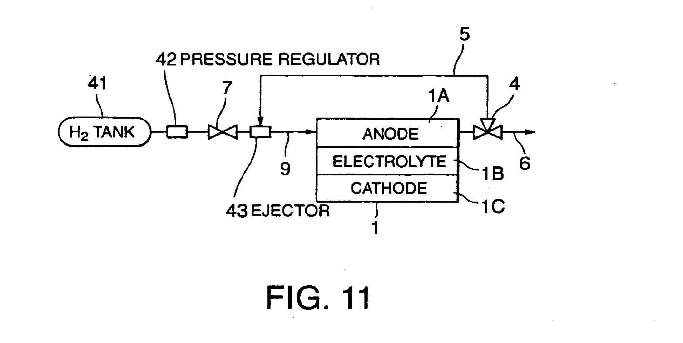

First, referring to FIG. 11, the seventh embodiment will be described.

In a fuel cell power plant according to this embodiment, hydrogen stored in a hydrogen tank 41 is supplied to the anode 1A of the fuel cell stack 1 through the hydrogen supplying passage 9 at a constant pressure determined by a pressure regulator 42. The anode effluent which is discharged from the anode 1A is merged in the hydrogen supplying passage 9 via an identical three-way valve 4 and recirculation passage 5 which are identical to the first embodiment, and an ejector 43.

In this embodiment, as in the first embodiment, when the impurity gas concentration in the hydrogen which is supplied to the anode 1A reaches a predetermined concentration, the three-way valve 4 is switched to the purge running position and the output current of the fuel cell stack 1 is increased so that the hydrogen concentration in the purged anode effluent can be reduced.

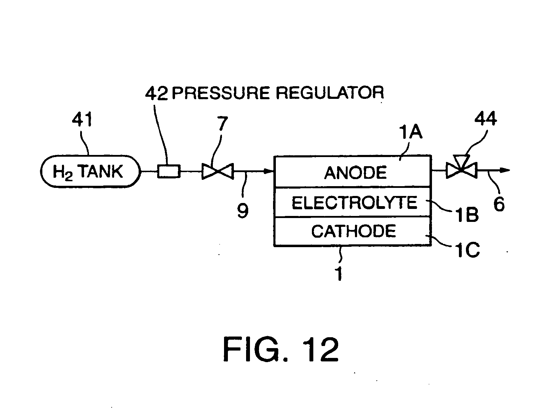

Next, referring to FIG. 12, the eighth embodiment will be described.

The fuel cell power plant according to this embodiment corresponds to that of the seventh embodiment where the anode effluent recirculation passage 5, the three-way valve 4 and the ejector 43 are omitted, and a shut-off valve 44 for the exhaust passage 6 provided instead.

In the interior of the fuel cell stack 1, as noted above, minute amounts of impurity gas leak out from the cathode 1C to the anode 1A via the electrolyte 1B. Minute amounts of impurity gas may also be contained in the hydrogen in the hydrogen tank 41. During normal operations in this embodiment, the shut-off valve 44 is closed and the controller 10 controls the flow control valve 7 such that all of the supplied hydrogen is used for generating power in the fuel cell stack 1.

When the impurity gas concentration in the hydrogen supplied to the anode 1A reaches a predetermined concentration, however, the controller 10 opens the shut-off valve 44 to release the anode effluent into the atmosphere. At this time, as in the first embodiment, the hydrogen concentration in the purged anode effluent may be reduced by increasing the output current of the fuel cell stack 1.

The contents of Tokugan 2002-38072, with a filing date of February 15, 2002 in Japan, are hereby incorporated by reference.

Although the invention has been described above by reference to certain embodiments of the invention, the invention is not limited to the embodiments described above. Modifications and variations of the embodiments described above will occur to those skilled in the art, in light of the above teachings.

For example, in each of the first through sixth embodiments, the flow control valve 7 is provided between the reformer 2 and the hydrogen separator 3. However, the flow control valve 7 is not limited to this position and may be provided anywhere upstream of the anode 1A.

The embodiments of this invention in which an exclusive property or privilege is claimed are defined as follows:

## Claims

1. A fuel cell power plant comprising a fuel cell stack (1) for performing power generation by means of an electrochemical reaction between hydrogen contained in hydrogen-rich gas which is supplied to an anode (1A), the hydrogen-rich gas containing an impurity gas, and oxygen which is supplied to a cathode (1C), the fuel cell stack (1) comprising a stacked body of a plurality of fuel cells each of which outputs an electrical current in accordance with an electrochemical reaction amount,
**characterized by**:
an adjustment mechanism (7, 22, 24) which adjusts one of a flow rate of the hydrogen-rich gas supplied to the anode (1A) and an output current of the fuel cell stack (1); and
a programmable controller (10) programmed to:
determine if a concentration of the impurity gas has reached a predetermined concentration (S2); and
control the adjustment mechanisms (7, 22, 24) to cause an entire amount of the hydrogen supplied to the anode (1A) to be expended in power generation by the fuel cell stack (1) (S3A, S5, S11, S21, S26), when the concentration of the impurity gas has reached the predetermined concentration (S3A, S5, S11, S21, S26).

2. The fuel cell power plant as defined in Claim 1, wherein the power plant further comprises means (12, 13) for detecting a concentration of impurity gas contained in the hydrogen-rich gas.

3. The fuel cell power plant as defined in Claim 1 or Claim 2, wherein the power plant further comprises a valve (4, 44) which can release anode effluent discharged from the anode (1A) due to the electrochemical reaction into the atmosphere, and the controller (10) is further programmed to operate the valve (10) to cause the anode effluent to be released into the atmosphere when the concentration of the impurity gas has reached the predetermined concentration (S3, S3A).

4. The fuel cell power plant as defined in any one of Claim 1 through Claim 3, wherein the controller (10) is further programmed to control the adjustment mechanism (7, 22, 24) to cause an amount of hydrogen supplied to the anode (1A) to be larger than an amount of hydrogen expended in power generation by the fuel cell stack (1).

5. The fuel cell power plant as defined in any one of Claim 1 through Claim 4, wherein the power plant further comprises a recirculation passage (5) which re-supplies anode effluent discharged from the anode (1A) due to the electrochemical reaction to the anode (1A), an exhaust passage (6) which releases the anode effluent into the atmosphere, and a three-way valve (4) for selectively connecting the recirculation passage (5) and the exhaust passage (6) to the anode (1A), and the controller (10) is further programmed to operate the three-way valve (4) to connect the recirculation passage (5) to the anode (1A) when the concentration of the impurity gas has not reached the predetermined concentration, and connect the exhaust passage (6) to the anode (1A) when the concentration of the impurity gas has reached the predetermined concentration (S1, S1A, S3, S3A).

6. The fuel cell power plant as defined in any one of Claim 1 through Claim 5, wherein the power plant further comprises a reformer (2) which produces a reformate gas containing hydrogen from fuel, and a hydrogen separator (3) which produces the hydrogen-rich gas by causing the hydrogen in the reformed gas to permeate through a hydrogen permeable membrane (3C), wherein the recirculating passage (5) recirculates the anode effluent to a flow of the hydrogen-rich gas between the hydrogen permeable membrane (3C) and the anode (1A).

7. The fuel cell power plant as defined in any one of Claim 1 through Claim 6, wherein the adjustment mechanism (7, 22, 24) comprises a flow control valve (7) which adjusts a flow rate of the hydrogen-rich gas supplied to the anode (1A).

8. The fuel cell power plant as defined in any one of Claim 1 through Claim 7, wherein the fuel cell stack (1) is connected to an electrical load (22), and the adjustment mechanism (7, 22, 24) comprises a current adjustment mechanism (22) which adjusts a current consumed by the electrical load (22).

9. The fuel cell power plant as defined in any one of Claim 1 through Claim 8, wherein the fuel cell stack (1) is connected to an electrical load (22) via an electrical circuit (21), and the adjustment mechanism (7, 22, 24) comprises a switch (24) which can short cut the electrical circuit (21).

10. The fuel cell power plant as defined in any one of Claim 1 through Claim 9, wherein the adjustment mechanism (7, 22, 24) comprises a current adjustment mechanism (22, 24) which adjusts the output current of the fuel cell stack (1), and the controller (10) is further programmed to control the current adjustment mechanism (22, 24) to increase the output current of the fuel cell stack (1) when the concentration of the impurity gas has reached the predetermined concentration (S5, S11).

11. The fuel cell power plant as defined in any one of Claim 1 through Claim 10, wherein the adjustment mechanism (7, 22, 24) comprises a flow control valve (7) which adjusts the flow rate of the hydrogen-rich gas supplied to the anode (1A), and the controller (10) is further programmed to control the flow control valve (7) to decrease the flow rate of the hydrogen-rich gas supplied to the anode (1A) when the concentration of the impurity gas has reached the predetermined concentration (S3A, S21).

12. The fuel cell power plant as defined in any one of Claim 1 through Claim 11, wherein the power plant further comprises an air supplying passage (31) which supplies air to the cathode (1C), a recirculation passage (5) which re-supplies anode effluent discharged from the anode (1A) due to the electrochemical reaction to the anode (1A), and a three-way valve (4) which selectively connects the recirculation passage (5) and the air supplying passage (31) to the anode (1A), the adjustment mechanism (7, 22, 24) comprises a flow control valve (7) which adjusts the flow rate of the hydrogen-rich gas supplied to the anode (1A), and the controller (10) is further programmed, when the concentration of the impurity gas has reached the predetermined concentration, to close the flow control valve (7) (S21), calculate an amount of residual hydrogen in the anode effluent recirculated to the anode (1A) (S22), and operate the three-way valve (4) to continue connecting the recirculation passage (5) to the anode (1A) until the residual hydrogen in the anode effluent is expended in the power generation by the fuel cell stack (1) (S1A).

13. The fuel cell power plant as defined in Claim 12, wherein the controller (10) is further programmed to operate the three-way valve (4) to connect the air supply passage (31) to the anode (1A) after the residual hydrogen in the anode effluent has been expended in the power generation by the fuel cell stack (1) (S28).

14. The fuel cell power plant as defined in any one of Claim 1 through Claim 13, wherein the adjustment mechanism (7, 22, 24) comprises a current adjustment mechanism (22) which adjusts the output current of the fuel cell stack (1), and the controller (10) is further programmed, when the concentration of the impurity gas has reached the predetermined concentration, to control the current adjustment mechanism (22) to cause the output current of the fuel cell stack (1) to coincide with a predetermined target output current (S5, S6).

15. The fuel cell power plant as defined in Claim 2, wherein the impurity gas concentration detecting means (12, 13) comprises an ammeter (12) which detects an output current of the fuel cell stack (1), and a voltmeter (13) which detects an output voltage of the fuel cell stack (1), and the controller (10) is further programmed to determine whether or not the concentration of the impurity gas has reached the predetermined concentration on the basis of the output current and the output voltage of the fuel cell stack (1) (S2).

16. The fuel cell power plant as defined in Claim 15, wherein the controller (10) is further programmed to calculate an output voltage per unit fuel cell from the output voltage of the fuel cell stack (1), calculate a current density per reaction surface area of the unit fuel cell from the output current of the fuel cell stack (1), and determine that the concentration of the impurity gas has reached the predetermined concentration when the output voltage per unit fuel cell is not greater than a voltage value which has been set according to the current density per reaction surface area of the unit fuel cell (S2).

17. The fuel cell power plant as defined in Claim 2, wherein the impurity gas concentration detecting means (12, 13) comprises a sensor (11) which detects a mass flow rate of the hydrogen-rich gas supplied to the anode (1A), the adjustment mechanism (7, 22, 24) comprises a current adjustment mechanism (22) which adjusts the output current of the fuel cell stack (1), and the controller (10) is further programmed, when the concentration of the impurity gas has reached the predetermined concentration, to calculate a target output current of the fuel cell stack (1) from the mass flow rate of the hydrogen-rich gas (S4) and control the current adjustment mechanism (22) to cause the output current of the fuel cell stack (1) to coincide with the target output current (S5, S6).

18. The fuel cell power plant as defined in Claim 2, wherein the adjustment mechanism (7, 22, 24) comprises a current adjustment mechanism (22) which adjusts the output current of the fuel cell stack (1), the impurity gas concentration detecting means (12, 13) comprises a voltmeter (13) which detects an output voltage of the fuel cell stack (1), and the controller (10) is further programmed to calculate an output voltage per unit fuel cell from the output voltage of the fuel cell stack (1), and control the adjustment mechanism (22) to cause the output voltage per unit fuel cell to coincide a predetermined voltage (S5, S6A).

19. A control method of a fuel cell power plant comprising a fuel cell stack (1) for performing power generation by means of an electrochemical reaction between hydrogen contained in hydrogen-rich gas which is supplied to an anode (1A), the hydrogen-rich gas containing an impurity gas, and oxygen which is supplied to a cathode (1C), the fuel cell stack (1) comprising a stacked body of a plurality of fuel cells each of which outputs an electrical current in accordance with an electrochemical reaction amount, and one of a flow rate of the hydrogen-rich gas supplied to the anode (1A) and an output current of the fuel cell stack (1) being adjusted by an adjustment mechanism (7, 22, 24), **characterized in that** the method comprising:
determining if a concentration of the impurity gas has reached a predetermined concentration (S2); and
controlling the adjustment mechanism (7, 22, 24) to cause an entire amount of the hydrogen supplied to the anode (1A) to be expended in power generation by the fuel cell stack (1) (S3A, S5, S11, S21, S26), when the concentration of the impurity gas has reached the predetermined concentration (S3A, S5, S11, S21, S26).

## Patentansprüche

1. Brennstoffzellenaggregat, umfassend einen Brennstoffzellenstapel (1) zum Durchführen einer Energieerzeugung mittels einer elektrochemischen Reaktion zwischen Wasserstoff, der in einem wasserstoffreichen Gas, das einer Anode (1A) zugeführt wird, enthalten ist, wobei das wasserstoffreiche Gas ein unreines Gas enthält, und Sauerstoff, der zu einer Kathode (1C) zugeführt wird, wobei der Brennstoffzellenstapel (1) einen gestapelten Körper aus einer Vielzahl von Brennstoffzellen umfasst, von denen jede einen elektrischen Strom gemäß einer elektrochemischen Reaktionsmenge ausgibt, **gekennzeichnet durch**:
eine Einstelleinrichtung (7, 22, 24), die eine Durchflussrate des zur Anode (1A) zugeführten wasserstoffreichen Gases oder einen Ausgangsstrom des Brennstoffzellenstapels (1) einstellt; und
eine programmierbare Steuerung (10), die programmiert ist, um:
zu bestimmen, ob eine Konzentration des unreinen Gases eine vorbestimmte Konzentration erreicht hat (S2); und
die Einstelleinrichtung (7, 22, 24) zu steuern, um zu veranlassen, dass eine Gesamtmenge des zur Anode (1A) zugeführten Wasserstoffs bei der Energieerzeugung **durch** den Brennstoffzellenstapel (1) verbraucht wird (S3A, S5, S11, S21, S26), wenn die Konzentration des unreinen Gases die vorbestimmte Konzentration erreicht hat (S3A, S5, S11, S21, S26).

2. Brennstoffzellenaggregat nach Anspruch 1, wobei das Aggregat ferner eine Einrichtung (12, 13) zum Erfassen einer Konzentration von unreinem Gas, das in dem wasserstoffreichen Gas enthalten ist, umfasst.

3. Brennstoffzellenaggregat nach Anspruch 1 oder Anspruch 2, wobei das Aggregat ferner ein Ventil (4, 44) umfasst, das Anodenausfluss, der von der Anode (1A) aufgrund der elektrochemischen Reaktion ausgeschieden wird, in die Atmosphäre freisetzen kann, und die Steuerung (10) ferner programmiert ist, das Ventil (10) zu betätigen, um zu veranlassen, dass der Anodenausfluss in die Atmosphäre freigesetzt wird, wenn die Konzentration des unreinen Gases die vorbestimmte Konzentration erreicht hat (S3, S3A).

4. Brennstoffzellenaggregat nach einem der Ansprüche 1 bis 3, wobei die Steuerung (10) ferner programmiert ist, die Einstelleinrichtung (7, 22, 24) zu steuern, um zu veranlassen, dass eine Menge an Wasserstoff, der zur Anode (1A) zugeführt wird, größer ist als eine Menge an Wasserstoff, die bei der Energieerzeugung durch den Brennstoffzellenstapel (1) verbraucht wird.

5. Brennstoffzellenaggregat nach einem der Ansprüche 1 bis 4, wobei das Aggregat ferner einen Rücklaufdurchgang (5), der Anodenausfluss, der von der Anode (1) aufgrund der elektrochemischen Reaktion ausgeschieden wurde, erneut der Anode (1A) zuführt, einen Auslassdurchgang (6), der den Anodenausfluss in die Atmosphäre freisetzt, und ein Dreiwegeventil (4) zum wahlweisen Verbinden des Rücklaufdurchgangs (5) und des Auslassdurchgangs (6) mit der Anode (1) umfasst, und die Steuerung (10) ferner programmiert ist, das Dreiwegeventil (4) zu betätigen, um den Rücklaufdurchgang (5) mit der Anode (1A) zu verbinden, wenn die Konzentration des unreinen Gases die vorbestimmte Konzentration nicht erreicht hat, und den Auslassdurchgang (6) mit der Anode (1A) zu verbinden, wenn die Konzentration des unreinen Gases die vorbestimmte Konzentration erreicht hat (S1, S1A, S3, S3A).

6. Brennstoffzellenaggregat nach einem der Ansprüche 1 bis 5, wobei das Aggregat ferner einen Reformer (2), der ein Wasserstoff enthaltendes Reformatgas aus Kraftstoff erzeugt, und einen Wasserstoffseparator (3), der das wasserstoffreiche Gas erzeugt, indem er veranlasst, dass der Wasserstoff in dem Reformatgas durch eine wasserstoffdurchlässige Membran (3C) hindurchtritt, umfasst, wobei der Rücklaufdurchgang (5) den Anodenausfluss zu einem Strom des wasserstoffreichen Gases zwischen der wasserstoffdurchlässigen Membran (3C) und der Anode (1A) zurückführt.

7. Brennstoffzellenaggregat nach einem der Ansprüche 1 bis 6, wobei die Einstelleinrichtung (7, 22, 24) ein Durchflusssteuerventil (7) umfasst, das eine Durchflussrate des zur Anode (1A) zugeführten wasserstoffreichen Gases einstellt.

8. Brennstoffzellenaggregat nach einem der Ansprüche 1 bis 7, wobei der Brennstoffzellenstapel (1) mit einer elektrischen Last (22) verbunden ist, und die Einstelleinrichtung (7, 22, 24) eine Stromeinstelleinrichtung (22) umfasst, welche einen von der elektrischen Last (22) verbrauchten Strom einstellt.

9. Brennstoffzellenaggregat nach einem der Ansprüche 1 bis 8, wobei der Brennstoffzellenstapel (1) über eine elektrische Schaltung (21) mit einer elektrischen Last (22) verbunden ist, und die Einstelleinrichtung (7, 22, 24) einen Schalter (24) umfasst, der die elektrische Schaltung (21) unterbrechen kann.

10. Brennstoffzellenaggregat nach einem der Ansprüche 1 bis 9, wobei die Einstelleinrichtung (7, 22, 24) eine Stromeinstelleinrichtung (22, 24) umfasst, die den Ausgangsstrom des Brennstoffzellenstapels (1) einstellt, und die Steuerung (10) ferner programmiert ist, die Stromeinstelleinrichtung (22, 24) zu steuern, um den Ausgangsstrom des Brennstoffzellenstapels (1) zu erhöhen, wenn die Konzentration des unreinen Gases die vorbestimmte Konzentration erreicht hat (S5, S11).

11. Brennstoffzellenaggregat nach einem der Ansprüche 1 bis 10, wobei die Einstelleinrichtung (7, 22, 24) ein Durchflusssteuerventil (7) umfasst, das die Durchflussrate des zur Anode (1A) zugeführten wasserstoffreichen Gases einstellt, und die Steuerung (10) ferner programmiert ist, das Durchflusssteuerventil (7) zu steuern, um die Durchflussrate des zur Anode (1A) zugeführten wasserstoffreichen Gases zu verringern, wenn die Konzentration des unreinen Gases die vorbestimmte Konzentration erreicht hat (S3A, S21).

12. Brennstoffzellenaggregat nach einem der Ansprüche 1 bis 11, wobei das Aggregat ferner einen Luftzufuhrdurchgang (31), der Luft zur Kathode (1C) zuführt, einen Rücklaufdurchgang (5), der Anodenausfluss, der von der Anode (1A) aufgrund der elektrochemischen Reaktion ausgeschieden wurde, zur Anode (1A) zurückführt, und ein Dreiwegeventil (4), das wahlweise den Rücklaufdurchgang (5) und den Luftzufuhrdurchgang (31) mit der Anode (1A) verbindet, umfasst, die Einstelleinrichtung (7, 22, 24) ein Durchflusssteuerventil (7) umfasst, das die Durchflussrate des zur Anode (1A) zugeführten wasserstoffreichen Gases einstellt, und die Steuerung (10) ferner programmiert ist, das Durchflusssteuerventil (7) zu schließen, wenn die Konzentration des unreinen Gases die vorbestimmte Konzentration erreicht hat (S21), eine Menge an Restwasserstoff in dem zur Anode (1A) zurückgeführten Anodenausfluss zu berechnen (S22) und das Dreiwegeventil (4) zu betätigen, um den Rücklaufdurchgang (5) weiterhin mit der Anode (1A) zu verbinden, bis der Restwasserstoff in dem Anodenausfluss bei der Energieerzeugung durch den Brennstoffzellenstapel (1) verbraucht ist (S1A).

13. Brennstoffzellenaggregat nach Anspruch 12, wobei die Steuerung (10) ferner programmiert ist, das Dreiwegeventil (4) zu betätigen, um den Luftzufuhrdurchgang (31) mit der Anode (1A) zu verbinden, nachdem der Restwasserstoff in dem Anodenausfluss bei der Energieerzeugung durch den Brennstoffzellenstapel (1) verbraucht wurde (S28).

14. Brennstoffzellenaggregat nach einem der Ansprüche 1 bis 13, wobei die Einstelleinrichtung (7, 22, 24) eine Stromeinstelleinrichtung (22) umfasst, die den Ausgangsstrom des Brennstoffzellenstapels (1) einstellt, und die Steuerung (10) ferner programmiert ist, die Stromeinstelleinrichtung (22) zu steuern, damit der Ausgangsstrom des Brennstoffzellenstapels (1) mit einem vorbestimmten Ziel-Ausgangsstrom übereinstimmt, wenn die Konzentration des unreinen Gases die vorbestimmte Konzentration erreicht hat (S5, S6).

15. Brennstoffzellenaggregat nach Anspruch 2, wobei die Erfassungseinrichtung (12, 13) für die Konzentration des unreinen Gases einen Strommesser (12), der einen Ausgangsstrom des Brennstoffzellenstapels (1) erfasst, und einen Spannungsmesser (13), der eine Ausgangsspannung des Brennstoffzellenstapels (1) erfasst, umfasst, und die Steuerung (10) ferner programmiert ist, auf der Grundlage des Ausgangsstroms und der Ausgangsspannung des Brennstoffzellenstapels (1) zu bestimmen, ob die Konzentration des unreinen Gases die vorbestimmte Konzentration erreicht hat (S2).

16. Brennstoffzellenaggregat nach Anspruch 15, wobei die Steuerung (10) ferner programmiert ist, eine Ausgangsspannung pro Brennstoffzelleneinheit aus der Ausgangsspannung des Brennstoffzellenstapels (1) zu berechnen, eine Stromdichte pro Reaktionsoberflächenbereich der Brennstoffzelleneinheit aus dem Ausgangsstrom des Brennstoffzellenstapels (1) zu berechnen, und zu bestimmen, dass die Konzentration des unreinen Gases die vorbestimmte Konzentration erreicht hat, wenn die Ausgangsspannung pro Brennstoffzelleneinheit nicht größer als ein Spannungswert ist, der gemäß der Stromdichte pro Reaktionsoberflächenbereich der Brennstoffzelleneinheit festgelegt wurde (S2).

17. Brennstoffzellenaggregat nach Anspruch 2, wobei die Erfassungseinrichtung (12, 13) für die Konzentration des unreinen Gases einen Sensor (11) umfasst, der eine Mengendurchflussrate des zur Anode (1A) zugeführten wasserstoffreichen Gases erfasst, die Einstelleinrichtung (7, 22, 24) eine Stromeinstelleinrichtung (22) umfasst, die den Ausgangsstrom des Brennstoffzellenstapels (1) einstellt, und die Steuerung (10) ferner programmiert ist, einen Ziel-Ausgangsstrom des Brennstoffzellenstapels (1) aus der Mengendurchflussrate des wasserstoffreichen Gases zu berechnen (S4) und die Stromeinstelleinrichtung (22) so zu steuern, dass der Ausgangsstrom des Brennstoffzellenstapels (1) mit dem Ziel-Ausgangsstrom übereinstimmt (S5, S6), wenn die Konzentration des unreinen Gases die vorbestimmte Konzentration erreicht hat.

18. Brennstoffzellenaggregat nach Anspruch 2, wobei die Einstelleinrichtung (7, 22, 24) eine Stromeinstelleinrichtung (22) umfasst, die den Ausgangsstrom des Brennstoffzellenstapels (1) einstellt, die Erfassungseinrichtung (12, 13) für die Konzentration des unreinen Gases einen Spannungsmesser (13) umfasst, der eine Ausgangsspannung des Brennstoffzellenstapels (1) erfasst, und die Steuerung (10) ferner programmiert ist, eine Ausgangsspannung pro Brennstoffzelleneinheit aus der Ausgangsspannung des Brennstoffzellenstapels (1) zu berechnen und die Einstelleinrichtung (22) so zu steuern, dass die Ausgangsspannung pro Brennstoffzelleneinheit mit einer vorbestimmten Spannung übereinstimmt (S5, S6A).

19. Steuerungsverfahren eines Brennstoffzellenaggregats mit einem Brennstoffzellenstapel (1) zum Durchführen einer Energieerzeugung mittels einer elektrochemischen Reaktion zwischen Wasserstoff, der in einem wasserstoffreichen Gas, das einer Anode (1A) zugeführt wird, enthalten ist, wobei das wasserstoffreiche Gas ein unreines Gas enthält, und Sauerstoff, der zu einer Kathode (1C) zugeführt wird, wobei der Brennstoffzellenstapel (1) einen gestapelten Körper aus einer Vielzahl von Brennstoffzellen umfasst, von denen jede einen elektrischen Strom gemäß einer elektrochemischen Reaktionsmenge ausgibt, und wobei eine Durchflussrate des zur Anode (1A) zugeführten wasserstoffreichen Gases oder ein Ausgangsstrom des Brennstoffzellenstapels (1) von einer Einstelleinrichtung (7, 22, 24) eingestellt wird, **dadurch gekennzeichnet, dass** das Verfahren umfasst:
Bestimmen, ob eine Konzentration des unreinen Gases eine vorbestimmte Konzentration erreicht hat (S2); und
Steuern der Einstelleinrichtung (7, 22, 24), um zu veranlassen, dass eine Gesamtmenge des zur Anode (1A) zugeführten Wasserstoffs bei der Energieerzeugung durch den Brennstoffzellenstapel (1) verbraucht wird (S3A, S5, S11, S21, S26), wenn die Konzentration des unreinen Gases die vorbestimmte Konzentration erreicht hat (S3A, S5, S11, S21, S26).

## Revendications

1. Centrale électrique à pile à combustible comprenant un empilage de piles à combustible (1) destinée à la production d'énergie électrique au moyen d'une réaction électrochimique entre de l'hydrogène contenu dans un gaz riche en hydrogène qui est fourni à une anode (1A), le gaz riche en hydrogène contenant un gaz d'impureté, et de l'oxygène qui est fourni à une cathode (1C), l'empilage de piles à combustible (1) comprenant un corps empilé d'une pluralité de piles à combustible dont chacune produit un courant électrique selon une quantité de réaction électrochimique, **caractérisée par** :
un mécanisme d'ajustement (7, 22, 24) qui ajuste l'un d'un débit du gaz riche en hydrogène fourni à l'anode (1A) et d'un courant de sortie de l'empilage de piles à combustible (1) ; et
une unité de commande programmable (10) programmée pour :
déterminer si une concentration du gaz d'impureté a atteint une concentration prédéterminée (S2) ; et
commander les mécanismes d'ajustement (7, 22, 24) pour amener une quantité entière de l'hydrogène fourni à l'anode (1A) à être dépensée lors de la production d'énergie électrique par l'empilage de piles à combustible (1) (S3A, S5, S11, S21, S26), lorsque la concentration de gaz d'impureté a atteint la concentration prédéterminée (S3A, S5, S11, S21, S26).

2. Centrale électrique à pile à combustible selon la revendication 1, dans laquelle la centrale électrique comprend en outre un moyen (12, 13) pour détecter une concentration de gaz d'impureté contenu dans le gaz riche en hydrogène.

3. Centrale électrique à pile à combustible selon la revendication 1 ou la revendication 2, dans laquelle la centrale électrique comprend en outre un robinet (4, 44) qui peut libérer un effluent d'anode expulsé de l'anode (1A) du fait de la réaction électrochimique dans l'atmosphère, et l'unité de commande (10) est en outre programmée pour faire fonctionner le robinet (10) de sorte à amener l'effluent d'anode à être libéré dans l'atmosphère lorsque la concentration du gaz d'impureté a atteint la concentration prédéterminée (S3, S3A).

4. Centrale électrique à pile à combustible selon l'une quelconque des revendications 1 à 3, dans laquelle l'unité de commande (10) est en outre programmée pour commander le mécanisme d'ajustement (7, 22, 24) pour amener une quantité d'hydrogène fournie à l'anode (1A) à être supérieure à une quantité d'hydrogène dépensée lors de l'a production d'énergie électrique par l'empilage de piles à combustible (1).

5. Centrale électrique à pile à combustible selon l'une quelconque des revendications 1 à 4, dans laquelle la centrale électrique comprend en outre un passage de recirculation (5) qui refournit l'effluent d'anode expulsé de l'anode (1A) du fait de la réaction électrochimique vers l'anode (1A), un passage d'échappement (6) qui libère l'effluent d'anode dans l'atmosphère, et un robinet à trois voies (4) pour raccorder sélectivement le passage de recirculation (5) et le passage d'échappement (6) à l'anode (1A), et l'unité de commande (10) est en outre programmée pour faire fonctionner le robinet à trois voies (4) de sorte à raccorder le passage de recirculation (5) à l'anode (1A) lorsque la concentration du gaz d'impureté n'a pas atteint la concentration prédéterminée, et raccorder le passage d'échappement (6) à l'anode (1A) lorsque la concentration du gaz d'impureté a atteint la concentration prédéterminée (S1, S1A, S3, S3A).

6. Centrale électrique à pile à combustible selon l'une quelconque des revendications 1 à 5, dans laquelle la centrale électrique comprend en outre un reformeur (2) qui produit un gaz de reformage contenant de l'hydrogène du combustible, et un séparateur d'hydrogène (3) qui produit le gaz riche en hydrogène en amenant l'hydrogène dans le gaz reformé à pénétrer dans une membrane perméable à l'hydrogène (3C), dans laquelle le passage de recirculation (5) refait circuler l'effluent d'anode vers un écoulement du gaz riche en hydrogène entre la membrane perméable à l'hydrogène (3C) et l'anode (1A).

7. Centrale électrique à pile à combustible selon l'une quelconque des revendications 1 à 6, dans laquelle le mécanisme d'ajustement (7, 22 24) comprend un robinet de régulation d'écoulement (7) qui ajuste un débit du gaz riche en hydrogène fourni à l'anode (1A).

8. Centrale électrique à pile à combustible selon l'une quelconque des revendications 1 à 7, dans laquelle l'empilage de piles à combustible (1) est raccordé à une charge électrique (22), et le mécanisme d'ajustement (7, 22, 24) comprend un mécanisme d'ajustement de courant (22) qui ajuste un courant consommé par la charge électrique (22).

9. Centrale électrique à pile à combustible selon l'une quelconque des revendications 1 à 8, dans laquelle l'empilage de piles à combustible (1) est raccordé à une charge électrique (22) par le biais d'un circuit électrique (21), et le mécanisme d'ajustement (7, 22, 24) comprend un interrupteur (24) qui peut couper le circuit électrique (21).

10. Centrale électrique à pile à combustible selon l'une quelconque des revendications 1 à 9, dans laquelle le mécanisme d'ajustement (7, 22, 24) comprend un mécanisme d'ajustement de courant (22, 24) qui ajuste le courant de sortie de l'empilage de piles à combustible (1), et l'unité de commande (10) est en outre programmée pour commander le mécanisme d'ajustement de courant (22, 24) de sorte à augmenter le courant de sortie de l'empilage de piles à combustible (1) lorsque la concentration du gaz d'impureté a atteint la concentration prédéterminée (S5, S11).

11. Centrale électrique à pile à combustible selon l'une quelconque des revendications 1 à 10, dans laquelle le mécanisme d'ajustement (7, 22, 24) comprend un robinet de régulation d'écoulement (7) qui ajuste le débit du gaz riche en hydrogène fourni à l'anode (1A), et l'unité de commande (10) est en outre programmée pour commander le robinet de régulation d'écoulement (7) de sorte à diminuer le débit du gaz riche en hydrogène fourni à l'anode (1A) lorsque la concentration du gaz d'impureté a atteint la concentration prédéterminée (S3A, S21).

12. Centrale électrique à pile à combustible selon l'une quelconque des revendications 1 à 11, dans laquelle la centrale électrique comprend en outre un passage de fourniture d'air (31) qui fournit de l'air à la cathode (1C), un passage de recirculation (5) qui refournit l'effluent d'anode expulsé de l'anode (1A) du fait de la réaction électrochimique vers l'anode (1A), et un robinet à trois voies (4) qui raccorde sélectivement le passage de recirculation (5) et le passage de fourniture d'air (31) à l'anode (1A), le mécanisme d'ajustement (7, 22, 24) comprend un robinet de régulation d'écoulement (7) qui ajuste le débit du gaz riche en hydrogène fourni à l'anode (1A), et l'unité de commande (10) est en outre programmée, lorsque la concentration du gaz d'impureté a atteint la concentration prédéterminée, pour fermer le robinet de régulation d'écoulement (7) (S21), calculer une quantité d'hydrogène résiduelle dans l'effluent d'anode recirculé vers l'anode (1A) (S22), et faire fonctionner le robinet à trois voies (4) de sorte à continuer le raccordement du passage de recirculation (5) à l'anode (1A) jusqu'à ce que l'hydrogène résiduel dans l'effluent d'anode soit dépensé lors de la production d'énergie électrique par l'empilage de piles à combustible (1) (S1A).

13. Centrale électrique à pile à combustible selon la revendication 12, dans laquelle l'unité de commande (10) est en outre programmée pour faire fonctionner le robinet à trois voies (4) de sorte à raccorder le passage de fourniture d'air (31) à l'anode (1A) après que l'hydrogène résiduel dans l'effluent d'anode a été dépensé lors de la production d'énergie électrique par l'empilage de piles à combustible (1) (S28).

14. Centrale électrique à pile à combustible selon l'une quelconque des revendications 1 à 13, dans laquelle le mécanisme d'ajustement (7, 22, 24) comprend un mécanisme d'ajustement de courant (22) qui ajuste le courant de sortie de l'empilage de piles à combustible (1), et l'unité de commande (10) est en outre programmée, lorsque la concentration du gaz d'impureté a atteint la concentration prédéterminée, pour commander le mécanisme d'ajustement de courant (22) de sorte à amener le courant de sortie de l'empilage de piles à combustible (1) à coïncider avec un courant de sortie cible prédéterminé (S5, S6).

15. Centrale électrique à pile à combustible selon la revendication 2, dans laquelle le moyen de détection de concentration de gaz d'impureté (12, 13) comprend un ampèremètre (12) qui détecte un courant de sortie de l'empilage de piles à combustible (1), et un voltmètre (13) qui détecte une tension de sortie de l'empilage de piles à combustible (1), et l'unité de commande (10) est en outre programmée pour déterminer si la concentration du gaz d'impureté a atteint ou n'a pas atteint la concentration prédéterminée sur la base du courant de sortie et de la tension de sortie de l'empilage de piles à combustible (1) (S2).

16. Centrale électrique à pile à combustible selon la revendication 15, dans laquelle l'unité de commande (10) est en outre programmée pour calculer une tension de sortie par pile à combustible unitaire à partir de la tension de sortie de l'empilage de piles à combustible (1), calculer une densité de courant par surface de réaction de la pile à combustible unitaire à partir du courant de sortie de l'empilage de piles à combustible (1), et déterminer que la concentration du gaz d'impureté a atteint la concentration prédéterminée lorsque la tension de sortie par pile à combustible unitaire n'est pas supérieure à une valeur de tension qui a été fixée selon la densité de courant par surface de réaction de la pile à combustible unitaire (S2).

17. Centrale électrique à pile à combustible selon la revendication 2, dans laquelle le moyen de détection de concentration de gaz d'impureté (12, 13) comprend un capteur (11) qui détecte un débit massique du gaz riche en hydrogène fourni à l'anode (1A), le mécanisme d'ajustement (7, 22, 24) comprend un mécanisme d'ajustement de courant (22) qui ajuste le courant de sortie de l'empilage de piles à combustible (1), et l'unité de commande (10) est en outre programmée, lorsque la concentration du gaz d'impureté a atteint la concentration prédéterminée, pour calculer un courant de sortie cible de l'empilage de piles à combustible (1) à partir du débit massique du gaz riche en hydrogène (S4) et commander le mécanisme d'ajustement de courant (22) pour amener le courant de sortie de l'empilage de piles à combustible (1) à coïncider avec le courant de sortie cible (S5, S6).

18. Centrale électrique à pile à combustible selon la revendication 2, dans laquelle le mécanisme d'ajustement (7, 22, 24) comprend un mécanisme d'ajustement de courant (22) qui ajuste le courant de sortie de l'empilage de piles à combustible (1), le moyen de détection de concentration de gaz d'impureté (12, 13) comprend un voltmètre (13) qui détecte une tension de sortie de l'empilage de piles à combustible (1), et l'unité de commande (10) est en outre programmée pour calculer une tension de sortie par pile à combustible unitaire à partir de la tension de sortie de l'empilage de piles à combustible (1), et commander le mécanisme d'ajustement (22) pour amener la tension de sortie par pile à combustible unitaire à coïncider avec une tension prédéterminée (S5, S6A).

19. Procédé de commande d'une centrale électrique à pile à combustible comprenant un empilage de piles à combustible (1) destiné à la production d'énergie électrique au moyen d'une réaction électrochimique entre de l'hydrogène contenu dans un gaz riche en hydrogène qui est fourni à une anode (1A), le gaz riche en hydrogène contenant un gaz d'impureté, et de l'oxygène qui est fourni à une cathode (1C), l'empilage de piles à combustible (1) comprenant un corps empilé d'une pluralité de piles à combustible dont chacune produit un courant électrique selon une quantité de réaction électrochimique, et l'un d'un débit du gaz riche en hydrogène fourni à l'anode (1A) et d'un courant de sortie de l'empilage de piles à combustible (1) étant ajusté par un mécanisme d'ajustement (7, 22, 24), **caractérisé en ce que** le procédé comprend :
le fait de déterminer si une concentration du gaz d'impureté a atteint une concentration prédéterminée (S2) ; et
la commande du mécanisme d'ajustement (7, 22, 24) pour amener une quantité entière de l'hydrogène fourni à l'anode (1A) à être dépensée lors de la production d'énergie électrique par l'empilage de piles à combustible (1) (S3A, S5, S11, S21, S26), lorsque la concentration de gaz d'impureté a atteint la concentration prédéterminée (S3A, S5, S11 S21, S26).
